# EUROPEAN PATENT APPLICATION

(11) **EP 2 369 497 A1**
(43) Date of publication of application: **28.09.2011**
(21) Application number: 10154267.8
(22) Date of filing: 22.02.2010
(51) Int. Cl.: G06F 17/30

(54) **Method, system and apparatus for distributing multimedia data**

(71) Applicant: RESEARCH IN MOTION LIMITED, Waterloo, Ontario N2L 3W8 (CA)
(72) Inventor: Ferrazzini, Axel, Mississauga Ontario L4W 5M4 (CA); Severino, Clara, Mississauga Ontario L4W 5P1 (CA); Martin-Cocher, Gaelle, Christine, Mississauga, Ontario L4W 5P1 (CA)
(74) Representative: Reichl, Wolfgang

(57) **Abstract**

A system, method and apparatus for distributing a multimedia data from a server are provided. Tag filter data is stored at the server. The multimedia data and at least one tag are received at the server from a computing device. The multimedia data is filtered by comparing the at least one tag with the tag filter data. The multimedia data is transmitted from the server to at least one multimedia renderer associated with at least one of the tag and the computing device.

## Description

### FIELD

The specification relates generally to computing devices, and specifically to a method, system and apparatus for distributing multimedia data.

### BACKGROUND

While digital multimedia has become widely available, and furthermore easy for the average user to generate (e.g. via digital cameras and the like), targeteddistribution of multimedia content is generally inefficient. Furthermore, there is a general lack of interactive solutions for targeted distribution of multimedia content For example, digital frames are popular, but they tend to be configured once (e.g. via loading content on a removable multimedia card) and then ignored

### SUMMARY

A first aspect of the specification provides a method for distributing a multimedia data from a server. The method comprises storing tag filter data at the server. The method further comprises receiving, at the server from a computing device, the multimedia data and at least one tag. The method further comprises filtering the multimedia data by comparing the at least one tag with the tag filter data. The method further comprises transmitting the multimedia data from the server to at least one multimedia renderer associated with at least one of the tag and the computing device.

The method can further comprise using at the server at least one of an identifier of the computing device and an identifier of the at least one multimedia renderer to perform at least one of the filtering and the transmitting.

The tag filter data can comprise at least one of: tags, the at least one tag, an association between the at least one tag and the at least one multimedia renderer, an association between a computing device and a multimedia renderer, an association between the at least one tag and the computing device, an identifier of the computing device and an identifier of the multimedia renderer.

The tag filter data can be exchanged between the server and the computing device by at least one of a provisioning method, a synchronisation method, a remote control method and an update method.

The filtering can comprise comparing the at least one tag with rules and tags from the tag filter data.

The method can further comprise: receiving privacy filter data at the server from the at least one multimedia renderer; storing the privacy filter data in association with the at least one identifier of the at least one multimedia renderer; and further filtering the multimedia data to be transmitted to the at least one multimedia renderer based on the privacy filter data.

The at least one tag can comprise a geotag.

The method can further comprise: receiving, at the server from the computing device, an indication that the multimedia data is to be deleted from the at least one multimedia renderer; and, in response, transmitting a delete command from the server to the at least one multimedia renderer causing the multimedia data to be deleted from the at least one multimedia renderer.

The computing device can be provided with remote control access over the at least one multimedia renderer via the server.

The method can further comprise: receiving from the computing device at the server an indication of a sequential order in which the multimedia data is to be processed at the at least one multimedia renderer; and, transmitting a command from the server to the at least one multimedia renderer causing the multimedia data to be processed in the sequential order.

A second aspect of the specification provides a server for distributing a multimedia data server. The server comprises a processing unit interconnected with a memory device and a communication interface. The processing unit is enabled to: store tag filter data at the memory device; receive, via the communication interface from the computing device, the multimedia data and at least one tag; filter the multimedia data by comparing the at least one tag with the tag filter data; and transmit the multimedia data, via the communication interface, to the at least one multimedia renderer.

A third aspect of the specification provides a method of distributing multimedia data from a computing device to at least one multimedia renderer via a server, the method implementable at the computing device. The method comprises: associating at least one tag with the multimedia data; and transmitting the multimedia data with the at least one tag to the server to trigger the server to transmit the multimedia data to at least one multimedia renderer associated with at least one of the at least one tag and the computing device.

Transmitting can comprise providing at least one of an identifier of the computing device and an identifier of the multimedia renderer.

The method can further comprise configuring tag filter data, wherein the configuring comprises at least one of updating the tag filter data, creating an association between the at least one tag, the computing device and the at least one multimedia renderer, and creating a rule based on one of a tag, a computing device identifier and a multimedia renderer identifier.

The at least one tag can comprise a geotag such that the multimedia data is transmitted only to multimedia renders in a given geographic area defined in the tag filter data.

The method can further comprise receiving at the computing device at least one of the at least one tag and tag filter data, wherein the receiving comprises one of a provisioning method, a synchronisation method, a remote control method and an update method.

The method of can further comprise: transmitting an indication to the server that the multimedia data is to be deleted from the at least one multimedia renderer to trigger the server to transmit a delete command from the server to the at least one multimedia renderer causing the multimedia data to be deleted from the at least one multimedia renderer.

The computing device can be provided with remote control access over the at least one multimedia renderer via the server.

The method can further comprise: transmitting, to the server, an indication of a sequential order in which the multimedia data is to be processed at the at least one multimedia renderer to trigger the server to transmit a command to the at least one multimedia renderer causing the multimedia data to be processed in the sequential order.

A fourth aspect of the specification provides computing device for distributing multimedia data to at least one multimedia renderer via a server. The computing device comprises a processing unit interconnected with a memory device and a communication interface. The processing unit is enabled to: associate at least one tag with the multimedia data; transmit the multimedia data with the at least one tag to the server, to trigger the server to transmit the multimedia data to at least one multimedia renderer associated with at least one of the at least one tag and the computing device.

A fifth aspect of the specification provides a computer program product, comprising a computer usable medium having a computer readable program code adapted to be executed to implement a method for distributing a multimedia data via from a server. The method comprises: storing tag filter data at the server; receiving, at the server from a computing device, the multimedia data and at least one tag; filtering the multimedia data by comparing the at least one tag with the tag filter data; and transmitting the multimedia data from the server to the at least one multimedia renderer associated with at least one of the tag and the computing device.

A sixth aspect of the specification provides a computer program product, comprising a computer usable medium having a computer readable program code adapted to be executed to implement a method of distributing multimedia data from a computing device to at least one multimedia renderer via a server, the method implementable at the computing device. The method comprises: associating at least one tag with the multimedia data; and transmitting the multimedia data with the at least one tag to the server, to trigger the server to transmit the multimedia data to at least one multimedia renderer associated with the at least one tag.

### BRIEF DESCRIPTIONS OF THE DRAWINGS

Implementations are described with reference to the following figures, in which:

Fig. 1 depicts a system for distributing multimedia data via a server, according to non-limiting implementations;

Fig. 2 depicts a computing device for distributing multimedia data via a server, according to non-limiting implementations;

Fig..3 depicts a method for distributing multimedia data via a server, according to non-limiting implementations;

Figs. 4 to 7 depict systems for distributing multimedia data via a server, according to non-limiting implementations;

Fig. 8 depicts an interface for configuring rules for distributing multimedia data, according to non-limiting implementations;

Fig. 9 depicts a system for distributing multimedia data via a server, according to non-limiting implementations;

Fig. 10 depicts an interface for configuring privacy rules for distributing multimedia data, according to non-limiting implementations; and

Figs. 11 to 14 depict systems for distributing multimedia data via a server, according to non-limiting implementations.

### DETAILED DESCRIPTION OF THE IMPLEMENTATIONS

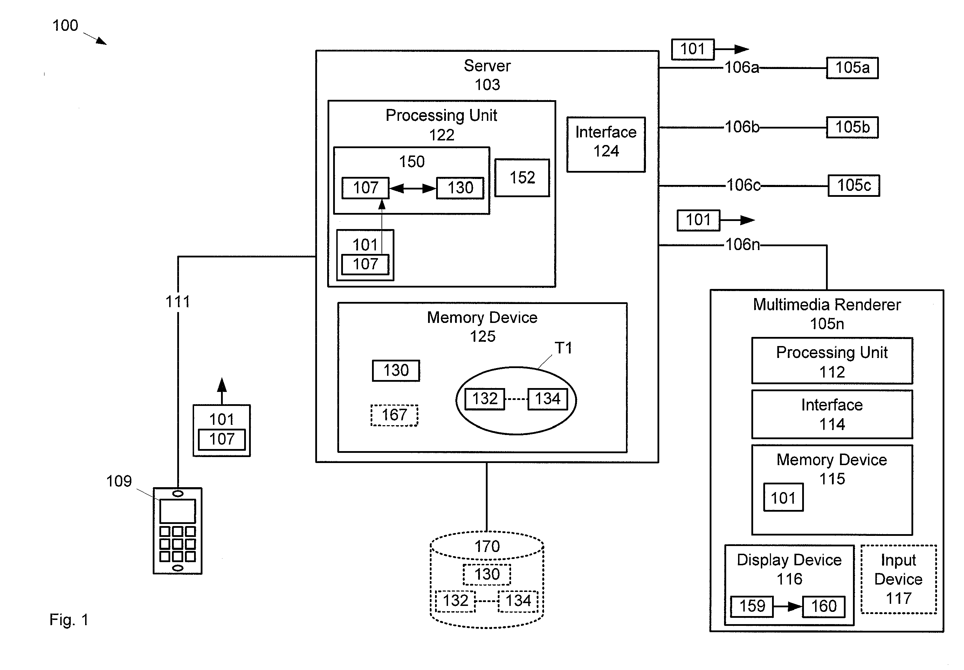

Figure 1 depicts a system 100 for distributing multimedia data 101 via a server 103, according to non-limiting implementations, multimedia data 101 referred to hereafter as data 101. Server 103 is enabled for communication with multimedia renderers 105a, 105b, 105c...105n (collectively multimedia renderers 105, and generically multimedia renderers 105), via respective link 106a, 106b, 106c... 106n (collectively links 106, and generically link 106) and a portable electronic device 109, via a link 111. Exemplary components of multimedia renderer 105n are depicted in Fig. 1, comprising a processing unit 112 interconnected with a communication interface 114, a memory device 115, a display device 116 and an optional input device 117 (for example via a computing bus, not depicted) though it is understood that each multimedia renderer 105 comprises part or all similar components. While four multimedia renderers 105 are depicted, it is understood that system 100 can comprise any suitable number of multimedia renderers 105 including as few as one multimedia renderer 10.5.

Furthermore, it is understood that multimedia renderer 105 can comprise any suitable multimedia renderer including but not limited to a digital frame, a computing device, a digital billboard, an audio player, a video player, and the like.

Data 101 can comprise digital image files, digital video files, digital audio files and/or a combination thereof, or the like. Indeed, any suitable type of multimedia data 101 is within the scope of present implementations. In general, data 101 can be acquired and/or stored by a portable electronic device 109 and transmitted to server 103. Furthermore, data 101 can be tagged by portable electronic device 109 via at least one tag 107. Server 10.3 can then filter and distribute data 101 to multimedia renderers 105 based on at least one tag 107, as will be described below. At least one tag 107 can comprise one tag, while in other implementations at least one tag 107 can comprise a plurality of tags.

Server 103 generally comprises a processing unit 122 interconnected with a communication interface 124 and a memory device 125.

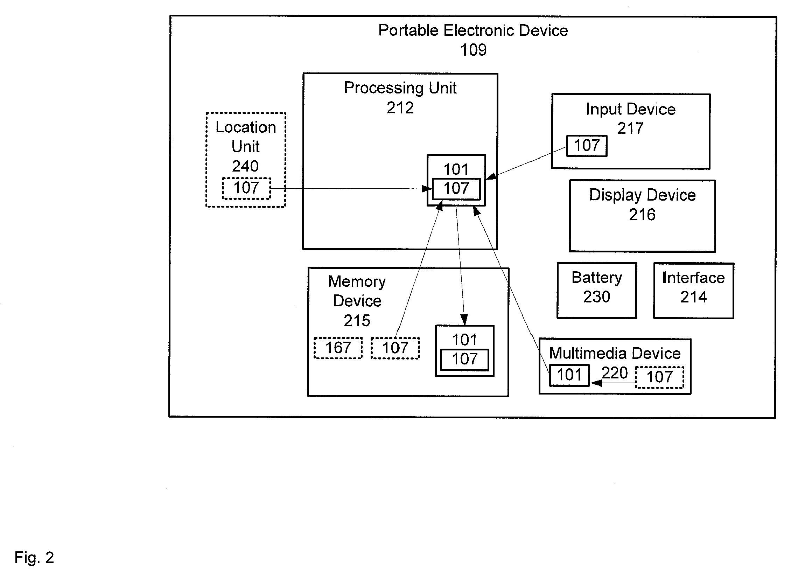

Furthermore, portable electronic device 109 is referred to hereafter as device 109, and/or portable electronic device 109, the two terms understood to be generally interchangeable. As depicted in Fig. 2, according to non-limiting implementations, device 109 comprises a processing unit 212 interconnected with a communication interface, a memory device 215, a display device 216, an input device 217, and a multimedia device 220, all in communication, for example, via a computing bus (not depicted), and powered by a battery 230. Multimedia device 220 is enabled to generate data 101 and can comprise a digital camera, a digital video recorder, a digital audio recorder a multimedia application and/or a combination, or the like. Indeed, any suitable type of multimedia device 109 is within the scope of present implementations. Furthermore, it is understood that at least one tag 107 can be received via input device 217 and/or via multimedia device 220 and/or memory device 215 such that data 101 is tagged with at least one tag 107, for example by processing unit 212. In some of these implementations, data 101 is tagged upon receipt of at least one tag 107 and/or when further input data is received indicating that data 101 is to be tagged.

In yet further implementations, at least one tag 107 can be pre-provisioned and stored in memory device 215, for example as a default tag value, data 101 being tagged with at least one tag 107 automatically or upon receipt of input data from input device 217 indicating that data 101 is to be tagged.

In implementations where at least one tag 107 is received or stored as a default tag value at multimedia device 220, the default tag value canbe automatically associated with data 101 at multimedia device 220 when data 101 is generated.

Non-limiting examples of default tag values include, but are not limited to, a characteristic of a camera, a characteristic of device 109, an alias of device 109 (e.g. a name of a user of device 109 and the like), a particular parameter (e.g. location) an alias of multimedia device 220 and the like, and/or a combination thereof

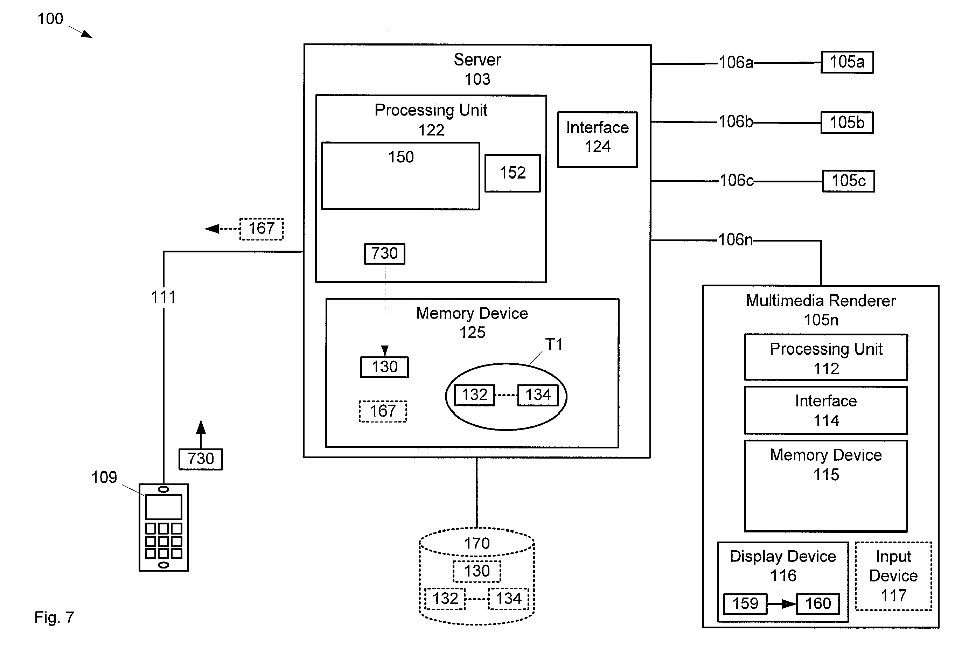

In some implementations, memory device 215 further stores a list of tag values 167, which can also be stored at server 103, as in Fig. 1, and received at device 109 from server 103, as described below with reference to Fig. 7. For example, list of tag values 167 can be stored at server 103, and transmitted to device 109. In these implementations, values for at least one tag 107 are chosen from list of tag values 167. In some of these values for at least one tag 107 can be limited to values stored in list of tag values 167.

In other implementations, device 100 can optionally comprise a location unit 240 for determining a location of device 109, including but not limited to a GPS (global positioning system) device, location triangulation device, and the like. In these implementations, at least one tag 107 comprises geotag data, such as a location of device 109 when data 101 is tagged. In these implementations, data 101 can be tagged automatically with geotag data from location device 240, or upon receipt of input from input device 217 indicating that data 101 is to be geotagged. Furthermore at least one tag 107 can comprise any suitable geotag data, such as terrestrial coordinates (e.g. latitude/longitude), an area (e.g. a city, a neighbourhood, a state/province, a country and the like), an address, or the like.

In yet further implementations, at least one tag 107 can comprise a geotag value received at input device 217 (e.g. as a value entered by a user).

In some implementations, at least one tag 107 can comprise values from a combination of sources, for example at least one tag 107 can comprise any suitable combination of a default value from memory device 215, a default value stored at multimedia device 220, input data from input device 217 and geotag data from location unit 240.

Any other suitable method of tagging data 101 with at least one tag 107 is within the scope of present implementations.

Returning now to Fig. 1, memory device 125 can store tag filter data 130, and the multimedia data 101 can be filtered by comparing at least one tag 107 with tag filter data 130, which can be provided by device 109 in a process described below, such a process can include, but is not limited to, at least one of a provisioning process, a synchronization process, a communication process and the like. It is understood that tag filter data 130 is for filtering multimedia data 101. Furthermore, memory device can store an identifier 132 of device 109 in association with respective identifiers 134 of multimedia renderers 105, for example in a Table T1. For example, Table T1 can comprise:

**Table T1**

| Identifier 132 of Device 109 (PIN) | Identifiers 134 of Multimedia Renderer 105 (PIN) | IP Address | Multimedia Renderer 105 |
|---|---|---|---|
| 3021ABC1 | 4061BBC1 | 192.999.8.63 | 105a |
| | 9025AAB2 | 12.999.18.19 | 105b |
| | 5021HAC3 | 192.999.9.64 | 105c |
| | 6091 DBD4 | 192.999.6.65 | 105n |

While Table T1 is provided in rows and columns it is understood that identifier 132 and identifier 134 can be associated in any suitable manner. Each of identifier 132 and identifiers 134 comprises data that enables server 103 to respectively identify device 109 and each multimedia renderer 105. In particular each of identifier 132 and identifiers 134 further enables server 103 to respectively communicate with each of device 109 and each multimedia renderer 105. It is further understood that device 109 identified in the "Identifier 132 of Device 109" column of Table T1 is associated with each multimedia renderer 105 identified in the "Identifiers 134 of Multimedia Renderer 105" column of Table T1.

While each of identifiers 132, 134 in Table T1 comprises a PIN ("Product Identification Number") is understood that each of identifier 132 and identifiers 134 can include any suitable identifier. Furthermore, Table T1 can optionally comprise an IP (Internet Protocol) address for each multimedia renderer 105. In some implementations, the IP address can be a fixed IP address and identifier 134 can comprise the IP address.

It is further understood that in some implementations, device 109 can be identified in Table T1 etc., by more than one identifier. For example, device 109 can be identified by any suitable combination of a PIN, an IP address, an alias, or the like. Hence identifier 132 can comprise one or more identifiers. Similarly, it is further understood that in some implementations, each multimedia renderer 105 can be identified in Table T1 etc., by more than one identifier. For example, each multimedia renderer 105 can be identified by any suitable combination of a PIN, an IP address, an alias, or the like. Hence identifier 134 can comprise one or more identifiers of each multimedia renderer 105.

Furthermore, while Table T1 further includes a column ("Multimedia Renderer 105") indicating the correspondence between identifiers 134 and each multimedia renderer 105 of Fig. 1, it is understood that this for clarification only, and that Table T1 need not include the third column.

In some implementations, Table T1 can further comprises an alias for each multimedia renderer 105 (e.g. "Mom's Digital Frame") and/or device 109 (e.g. "My PDA").

Furthermore, it is understood that multimedia data 101 received at server 103 from device 109 is to be transmitted to multimedia renderer 105 after filtering based on a comparison of at least one tag 107 with tag filter data 130. For example, tag filter data 130 can comprise the contents of Table 1:

**Table 1**

| Tag 107 | Filter |
|---|---|
| Vacation | Transmit to All Multimedia Renderers 105 |
| Mom | Transmit to Multimedia Renderer 105n |
| Family | Transmit to Multimedia Renderers 105a, 105n |
| Geotag | Transmit to Multimedia Renderers 105 within 100 kilometres of geotag |
| Canada | Transmit to Multimedia Renderers 105 in Canada |

While Table 1 is arranged in rows and columns, it is understood that tag filter data 130 can be stored in any suitable format. From Table 1, it is understood that tag filter data 130 comprises rules for filtering data 101 based on at least one tag 107. Hence, Table 1 comprises a column "Tag 107" comprising possible values for at least one tag 107. Table 1 further comprises a column "Filter" comprising a filtering action to be taken when at least one tag 107 comprises the corresponding value in column "Tag 107". For example: when at least one tag 107 comprises the value "Vacation", the tagged data 101 is transmitted to all associated multimedia renderers 105; when at least one tag 107 comprises the value "Mom", the tagged data 101 is transmitted to multimedia renderer 105n; when at least one tag 107 comprises the value "Family", the tagged data 101 is transmitted to multimedia renderers 105a, 105n; when at least one tag 107 comprises a geotag, for example including location data as described above, the tagged data 101 is transmitted to multimedia renderers 105 within 100 kilometres of the location data in the geotag; and when at least one tag 107 comprises the value "Canada", the tagged data 101 is transmitted to multimedia renderers 105 in Canada. Tag filer data 130 can include any other suitable rules for filtering data 101 1 based on at least one tag 107.

Furthermore, when data 101 comprises a plurality of tags, similar to at least one tag 107, and when rules in tag filter data 130 conflict, any suitable conflict resolution process can be used to resolve the conflict. For example tag filter data 130 can further be associated with priorities associated with each potential value for at least one tag 107: in some implementations, the of the data in Table 1 can be indicative of priority (i.e. the first row having highest priority and the last row having lowest priority). In further implementations, device 109 can provide a prompt to resolve a conflict manually (e.g. the prompt prompting a user to resolve the conflict). Furthermore, in other implementations, filtering rules could apply to a combination of tags 107.

A non-limiting example will now be described with reference to Fig. 1 to demonstrate present implementations. In the example, it is assumed that identifier 132 is associated with identifiers 134 at server 103, and that tag filter data 1301s stored at server 103. Furthermore, it is assumed that data 101 has been acquired at device 109 and tagged with at least one tag 107, at least one tag 107 comprising "Family". It is further assumed that data 101, tagged with at least one tag 107 is transmitted to server 103 for distribution.

When data 101 is received at server 103, processing unit 122 processes data 101 to compare at least one tag 107 with tag filter data 130. Processing unit 122 hence determines, e.g. as tag filter data 130 comprises the contents of Table 1, that data 101 is to be transmitted to multimedia renderers 105a, 105n: i.e. when at least one tag 107 comprises a value "Family" then processing unit 122 implements the corresponding filter action "Transmit to Multimedia Renderers 105a, 105n".

Hence, server 103 is enabled to distribute data 101 to multimedia renderers 105 bases on at least one tag 107.

Elements of Fig. 1 are now described in further detail.

Link 111 generally comprises a wireless link between mobile electronic device 109 and server 103. Link 111 can hence comprise a wireless network, such as a wireless carrier network, including but not limited to any suitable cell phone network (1X, UMTS (Universal Mobile Telecommunications System), CDMA (code division multiple access), GSM (Global System for Mobile communications), 3G, EDGE, and the like), in combination with any suitable combination of wired or wireless networks as desired, including but not limited to a packet based network, the Internet, an analog network, the PSTN (public switched telephone network), a WiFi network, a WiMax network and the like.

Similarly, links 106 can each comprise any suitable combination of wired or wireless networks as desired, including but not limited to a packet based network, the Internet, an analog network, the PSTN, a WiFi network, a WiMax network and the like. Furthermore, each of links 106 can be similar or different as desired.

Mobile electronic device 109 can comprise any suitable mobile electronic device and/or mobile computing device and/or mobile communication device, including but not limited to a laptop or notebook computer, a PDA, a cellular or mobile phone, a portable electronic device, or the like. However, other suitable types of mobile electronic devices are within the scope of present implementations.

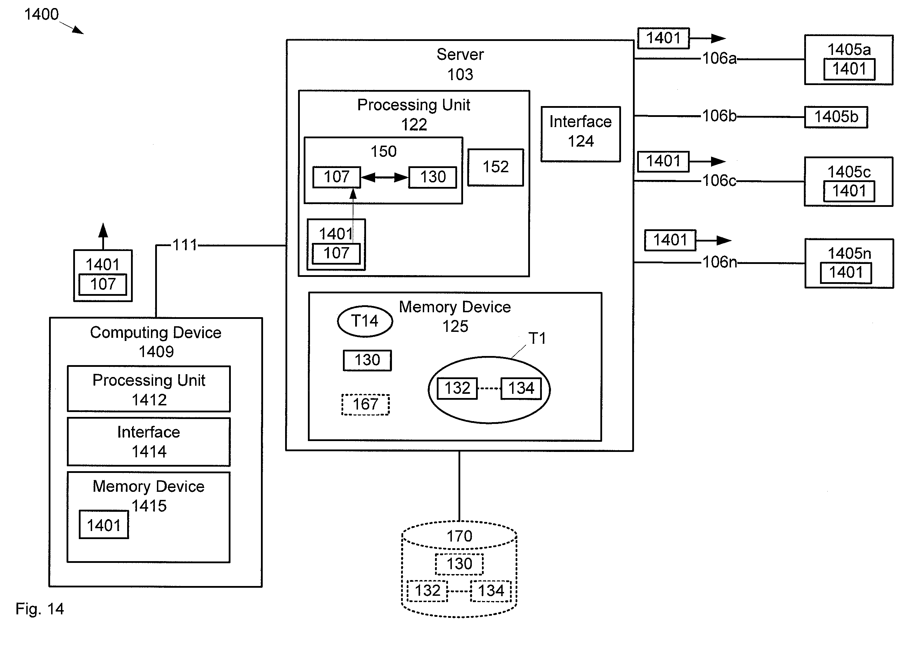

However, it is understood that mobile electronic device 109 is merely exemplary and can be replaced with any suitable computing device, including but not limited to a personal computer, a main frame computer, a server, and the like, for example as described below with reference to Fig. 14.

Server 103 comprises processing unit 122, communications interface 124 and memory device 125 all in communication, for example, via a computing bus (not depicted). Server 103 can include but is not limited to any suitable combination of a computer, a mainframe computer, a server and the like. Other suitable types of computing devices are within the scope of present implementations.

Processing unit 122 can comprise any suitable processor, or combination of processors, including but not limited to a microprocessor, CPU (central processing unit), or the like. Processing unit 122 can comprise a comparator 150 for comparing values including but not limited to comparing at least one tag 107 with tag filter data 130, and a calculator 152 for performing mathematical operations on numerical values and/or performing textual operations on text values.

Memory device 125 can be any suitable one of or combination of volatile memory, non-volatile memory, RAM, ROM, hard drive, optical drive, or the like. In particular, memory device 125 is enabled to store data tag filter data 130, and identifier 132, identifiers 134 (and/or Table T1).

In alternative implementations, one or more of tag filter data 130, and identifier 132 associated with identifiers 134 can be stored in an optional database 170 accessible to server 103.

Communications interface 124 is enabled to communicate with multimedia renderers 205 via links 106, and with mobile electronic device 109 via link 111. Accordingly, communications interface 124 is enabled to communicate according to any suitable protocol which is compatible with links 106, 111, including but not limited to packet based protocols, Internet protocols, analog protocols, cell phone protocols (1X, UTMS, CDMA, GMS, 3G, EDGE and the like), WiFi protocols, WiMax protocols and/or a combination of these. Other suitable protocols are within the scope of present implementations.

With regard to multimedia renderer 105n, each of processing unit 112, communication interface 114, and memory device 115 can be respectively similar to processing unit 122, communication interface 124, and memory device 125 described above. In particular, interface 124 is enabled to communicate with server 103 via link 106n. Similarly, each multimedia renderer is enabled to communicate with sever 103 via a respective link 106. Furthermore, memory device 115 is enabled to store data 101 (and, in some implementations, at least one tag 107); in some implementations, memory device 115 can comprise a removable media card, including but not limited to a flash memory card. Furthermore in some implementations, multimedia renderer 105 can be enabled to sort received data 101 based on tags e.g. to create an album per identifier 132, per at least one tag 107 and/or a combination.

Display device 116 comprises circuitry 159 for generating representations of data 101, for example representation 160, including but not limited to a visual representation, a video representation, and an audio representation, depending on data 101. Display device 116 can include any suitable one of or combination of CRT (cathode ray tube) and/or flat panel displays (e.g. LCD (liquid crystal display), plasma, OLED (organic light emitting diode), capacitive or resistive touchscreens, and the like). Circuitry 159 can include any suitable combination of circuitry for controlling the CRT and/or flat panel displays etc., including but not limited to display buffers, transistors, electron beam controllers, LCD cells, plasmas cells, phosphors etc. In particular, display device 116 and circuitry 159 can be controlled by processing unit 112 to generate representation 160.

Input device 117, when present, is generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations. In implementations where input device 117 comprises a touch screen, processing unit 112 is enabled to detect select events and/or swipe events at input device 117.

Returning to Fig. 2, each of processing unit 212, communication interface 214, and memory device 215 can be respectively similar to processing unit 122, communication interface 124, and memory device 125 described above. Further, display device 216 and input device 217 can be respectively similar to display device 116 and input device 117 described above. In particular, interface 214 is enabled to communicate with server 103 via link 106n. Similarly, each multimedia renderer is enabled to communicate with sever 103 via link 111. Furthermore, memory device 215 can be enabled to store data 101 and/or at least one tag 107.

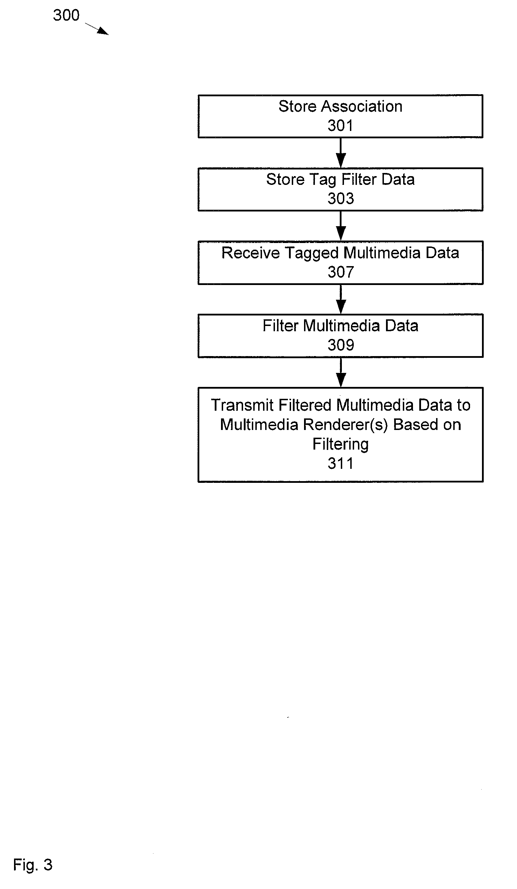

Attention is now directed to Figure 3 which depicts a method 300 for distributing multimedia data via a server. In order to assist in the explanation of method 300, it will be assumed that method 300 is performed using system 100. Furthermore, the following discussion of method 300 will lead to a further understanding of system 100 and its various components. However, it is to be understood that system 100 and/or method 300 can be varied, and need not work exactly as discussed herein in conjunction with each other, and that such variations are within the scope of present implementations.

At step 301 an association between device 109 and multimedia renderers 105 is stored either in memory device 125 and/or database 170, as will be described below. However, it is understood that step 301 occurs via interactions between server 103 and device 109, and/or via interactions between server 103 and multimedia renderers 105.

At step 303, tag filter data 130 is stored in memory device 125 and/or database 170, as will be described below with reference to Fig. 7. It is furthermore understood that tag filter data107 is for filtering multimedia data based on tags.

Steps 301 and 303 can occur in any suitable order and/or in parallel. Furthermore, it is understood that steps 301 and/or 303 can be repeated as desired in method 300 such that associations between device 109 and multimedia renderers 105 can be added or deleted as desired, and that tag filter data 130 can be updated, with filtering rules added or deleted as desired.

At step 307 data 101 is received from device 109. It is understood that data 101 is tagged with at least one tagged 107, and that data 101 is tagged at device 109. It is understood that server 103 is enabled to identify data 101 as being received from device 109, for example, by the inclusion of an identifier 132 of device 109 with data 101 or within the communication between device 109 and server 103. It is furthermore understood that an identifier of device 109 (e.g. identifier 132) was previously stored in association with at least one identifier 134 of at least one multimedia renderer 105 in memory device 125 and/or in database 170, as in step 301.

At step 309 data 101 is filtered by comparing at least one tag 107 with tag filter data 130. At step 311, data 101 is transmitted from server 103 to at least one multimedia renderer 105 based on association between identifiers 132 and 134, and the filtering of step 309. In other words, server 103 only transmits data 101 to the particular multimedia renderers 105 determined at step 309. Steps 309 and 311 generally result in server 103 pushing data 101 to at least one multimedia renderer 105, data 101 filtered by server 103 according to at least one tag 107. Indeed, in some implementations, step 311 does not occur when filtering at step 309 results in a determination that data 101 is not be transmitted to any of multimedia renderer 105 associated with device 109. Furthermore, in some implementations, server 103 can also transmit at least one tag 107, in association with data 101, to multimedia renderer 105. It is understood that after data 101 is received at the given multimedia renderers 105, as determined at step 309, data 101 can be processed such that data 101 is played/provided at each given multimedia renderer 105, for example in representation 160.

In implementations, where memory device 115 becomes full (i.e. data 101 cannot be stored) an error message can be transmitted to server 103, and then back to device 109. As will be described below, in some implementations, device 109 can then cause other data to be deleted from multimedia renderer 105n, making room for data 101, so that data 101 can be retransmitted and stored. Alternatively, previously received data can be deleted from the memory device 115 to ensure the reception and storage of new data 101. In some implementations, data can be deleted after a given period of time. In other implementations, data above a threshold size can be deleted. In yet further implementations, data can be deleted via a prompt and the subsequent receipt of input data from input device 117 (e.g. a user prompt prompts user to cause deletion of data).

Various methods that can be used to provisioning the association between identifier 132 and identifiers 134 are described hereafter, though no given provisioning method is to be considered particularly limiting. It is understood that step 301of method 300 can comprise one of more of the methods described hereafter.

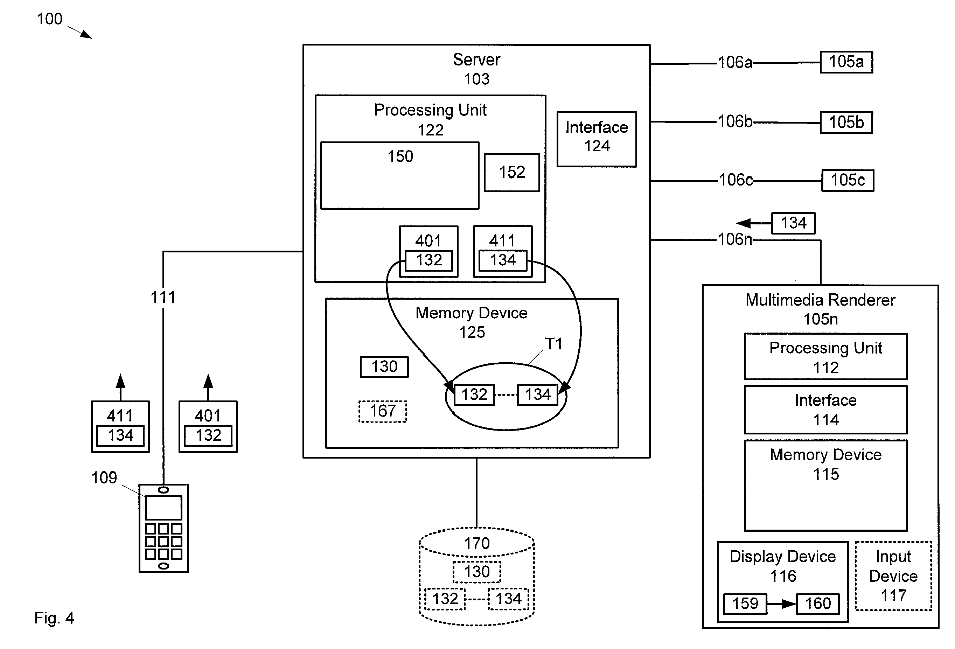

In some implementations, as depicted in Fig. 4 (generally similar to Fig. 1 with like elements having like numbers), device 109 can transmit a registration message 401 to server 103, comprising identifier 132, indicating that device 109 is registering to distribute data 101 (and alternatively along with at least one tag 107) to multimedia renderers 105. Identifier 132 is then extracted from message 401 at server 103 and stored in memory device 125 (and/or database 170).

In some of these implementations, identifiers 134 can then be received at server 103 from device 109. For example, consider instances where a multimedia renderer 105 comprises a digital frame, and the like. The digital frame can be factory provisioned with a PIN (product information number) (i.e. PIN is equivalent to identifier 134). The PIN can then be communicated to device 109, for example by a user of the digital frame calling a user of device 109 (e.g. a phone call) and/or the PIN being transmitted in an e-mail to device 109. The PIN/identifier 134 can be entered into device 109 via input device 217 and transmitted to server 103 in a message 411, as depicted in Fig. 4. Message 411 can include a command to store the PIN in association identifier 132 of device 109 and/or message 411 inherently instruct server 103 to generate the association. If Table T1 does not yet exist (e.g. no associations yet exist between device 109 and any multimedia renderers), Table T1 can be generated when message 411 is received (alternatively, Table T1 can be generated when message 401 is received at server 103). Server 103 is enabled to determine that message 411 is received from device 109 for example, by extracting identifier 132 from message 411.

In some implementations, identifier 134 can be sufficient to identify multimedia renderer 105 in a network, while in other implementations a network address of multimedia renderer 105 can be included in message 411. In other implementations, multimedia renderer 105 can be provisioned with a network address of server 103, such that multimedia renderer 105 can establish communication with server 103, either before or after message 411 is received at server 103, for example by transmitting identifier 134 to server 103 (e.g. from multimedia renderer 105n via link 106n, as depicted). It is understood that transmitting identifier 134 to server 103, comprises at least one of a registration process, a subscription process, or the like, so that multimedia renderer 105 can receive data 101 from device 109, or any other device, associated with multimedia renderer 105, which transmits tagged multimedia data to server 103.

In some implementations, messages 401, 411 can be combined into a single registration message.

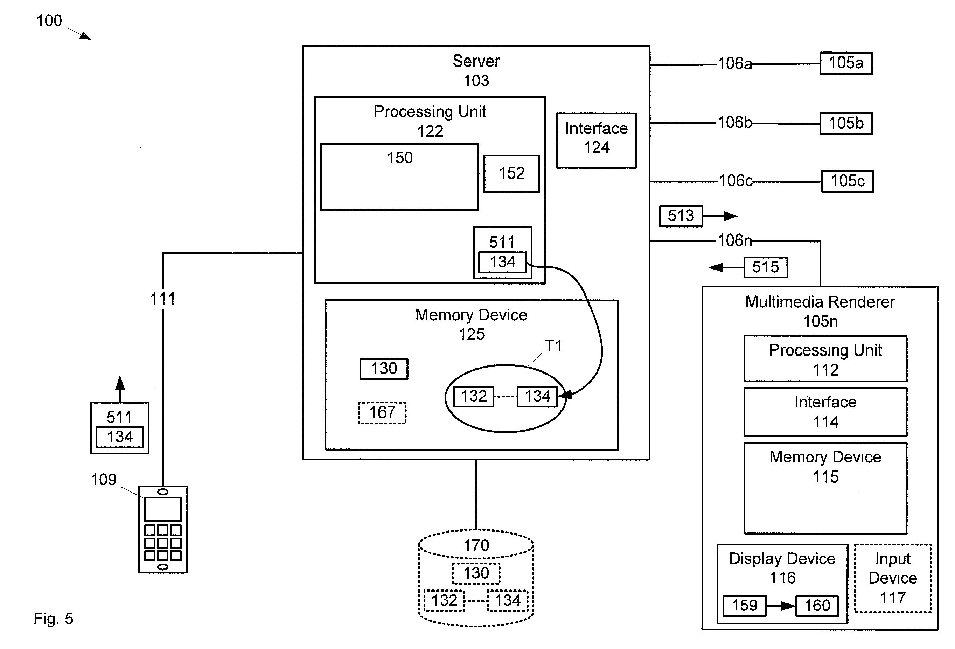

Turning now to Fig. 5, which is generally similar to Fig. 4, with like elements having like numbers, in some implementations, identifier 134 can be received at device 109 (e.g. after being communicated via a phone call or e-mail, as described above), and identifier 134 can be transmitted to server 103 within invitation data 511, similar to message 411. Once invitation data 511 is received at server 103, identifier 134 is stored in association with identifier 132 and data 101 can thereafter be distributed to multimedia renderer 105 corresponding to identifier 134. In some implementations, identifier 134 can be sufficient to identify multimedia renderer 105 in a network, while in other implementations a network address of multimedia renderer 105 can be included in message 511.

In some of these implementations, however, once message 511 is processed by server 103, server 103 thereafter transmits invitation data 513 to multimedia renderer 105 corresponding to identifier 134 (e.g. herein after multimedia renderer 105n). Invitation data 513 is for informing multimedia renderer 105n that device 109 is requesting an association with multimedia renderer 105n; hence before the association between identifier 132 and identifier 134 can occur, and hence before distribution of data 101 to multimedia renderer 105n can occur, multimedia renderer 105n responds to invitation 513 with invitation acceptance data 515. When invitation acceptance data 515 is received at server 103, the association between identifier 132 and identifier 134 occurs. If invitation acceptance data 515 is not received at server 103, the association between identifier 132 and identifier 134 does not occur. Alternatively, multimedia renderer 105n can transmit invitation decline data (not depicted), and similarly the association does not occur. Invitation acceptance data 515 can be transmitted by multimedia renderer 105n upon receipt of input data via input device 117, enabling a user to accept (or decline) the invitation. Alternatively, invitation acceptance data 515 can be transmitted by multimedia renderer 105n automatically upon receipt of invitation 113.

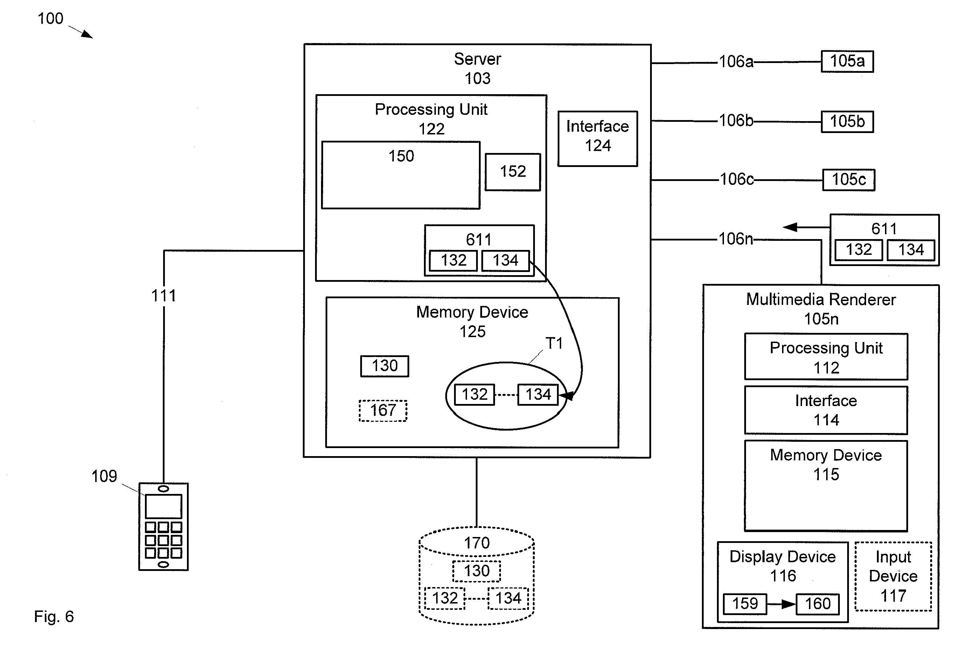

Attention is now directed to Fig. 6, similar to Fig. 5 with like elements having like numbers. However, in these implementations, subscription data 611 is generated at multimedia renderer 105n (and/or any other suitable multimedia renderer 105), subscription data for subscribing to data 101 from device 109. Subscription data 611 can comprises identifier 132, or any other suitable identifier of device 109, and identifier 134 of multimedia renderer 105n. For example, similar to implementations described above with regard to Figs. 4 and 5, identifier 132 can be communicated via a phone call, an e-mail or the like and received at multimedia renderer 105n. In any event, once subscription data 611 is received at server 103 from at least one multimedia renderer 105, subscription data 611 comprising at least one identifier 134 of at least one multimedia renderer 105, then at least one identifier 134 is stored in association with identifier 132, based on subscription data 611, subscription data 611 being further indicative that the association is to occur. Note that in these implementations, it is understood that device 109 has already registered with server 103, as described above with reference to Fig. 4 and registration message 401. In some implementations, the process described in Fig. 4 can comprise at least one of a subscription process, a registration process, or the like.

Attention is now directed to Fig. 7, similar to Fig. 1, with like elements having like numbers. However, in these implementations, rules contained in tag filter data 130 are generated and/or updated via data 730 transmitted from device 109 to server 103, data 730 comprising data for at least one of generating and updating rules contained in tag filter data 130 for that device 109. For example, in exemplary implementations, tag filter data 130 can initially comprise the contents of Table 2:

**Table 2**

| Tag 107 | Filter |
|---|---|
| Vacation | Transmit to All Multimedia Renderers 105 |
| Mom | Transmit to Multimedia Renderer 105n |

It is understood that Table 2 is similar to Table 1, described above, Table 2 comprising, however only the first two filtering rules of Table 1.

To updated the rules contained in tag filter data 130, device 109 generates data 730, which can comprise the contents of Table 3:

**Table 3**

| Tag 107 | Filter |
|---|---|
| Family | Transmit to Multimedia Renderers 105a, 105n |
| Geotag | Transmit to Multimedia Renderers 105 within 100 kilometres of geotag |
| Canada | Transmit to Multimedia Renderers 105 in Canada |

It is understood that Table 3 is similar to Table 1, described above, Table 3 comprising, however the last three filtering rules of Table 1. When data 730 is received at server 103, data 730 is merged into the rule set contained in tag filter data 130 such that the rule set now includes the contents of Table 3 for that device 109 and hence is similar to Table 1.

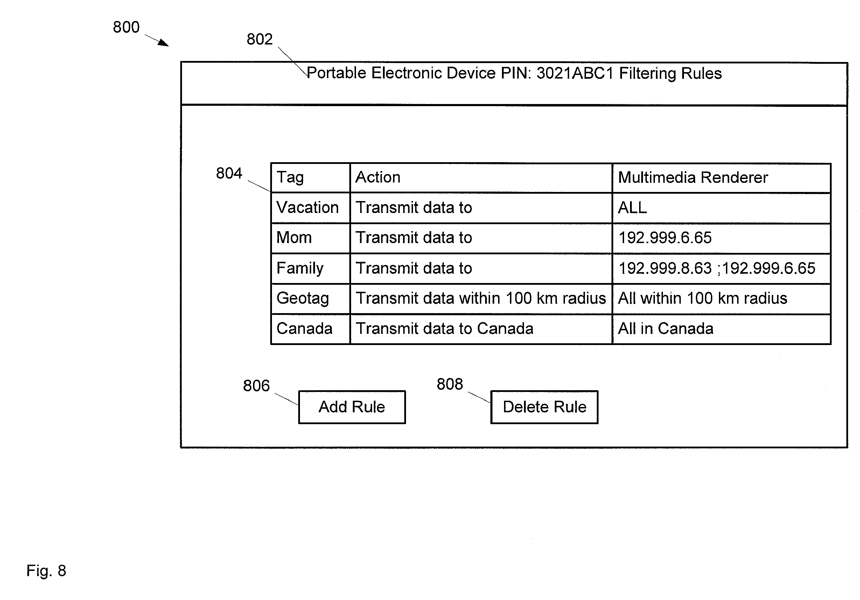

Data 703 can be generated via an application at device 109 for generating and/or updating the rules contained in tag filer data 130. For example, as depicted in Fig. 8, the application can comprise a virtual interface 800 which enables choosing at least one tag 107 and associating at least one tag 107with multimedia renderer 105 and which enables updating the current association (so-called rules) contained in tag filter data 130. For example, virtual interface 800 can comprise an identifying header 802, and a body 804 in which exiting rules can be viewed and edited, and new rules can be added via a virtual button 806. It is understood that each line in body 804 corresponds to a line in Table 1, and that each field of each line in body 804 can be editable to change a tag value and/or an associated action and/or a multimedia renderer 105 (or group of multimedia renderers 105) to which data 101 is to be transmitted. It is further understood that each field of body 804 can be received as alphanumeric text via input device 217 and/or selected via any suitable pull down menu, list, or the like. It is yet further understood that body 804 can be populated by provisioning, downloading and/or synchronising existing tag filter data 130 from server 103 to device 109 and/or from a copy of tag filter data 130 stored at device 109 and/or any other suitable method.

In some of these implementations, prior to the rules contained in tag filter data 130 being updated and/or generated, list of tag values 167 is transmitted to device 109 from server 103. For example, server 103 can be pre-provisioned with list of tag values 167 by an administrator of system 100, and it is understood that, in these implementations, values for at least one tag 107 are constrained to values in list of tag values 167. Hence, when new rules are added to tag filter data 130, values for at least one tag 107 in body 804 are constrained to values in list of tag values 167. Furthermore, in implementations where list of tag values 167 is updated at server 103, for example by a system administrator, server 103 and device 109 can synchronize the list of tag values 167.

However, in some implementations, no constraints are placed on the values for tags in tag filter data 130, and any suitable value can be entered into body 800.

In some implementations, virtual interface 800 can be generated at server 103 and viewed at device 109 in a client-server environment. It is yet further understood that actuation of virtual button 806 can add a line to body 804, which can then be edited as desired to reflect a new rule in tag filter data 130. In some implementations, rules in tag filter data 130 can be deleted via selection of a line in body 804 and actuation of a virtual button 808 for deleting rules. In some implementation a virtual button can be used to update changes.

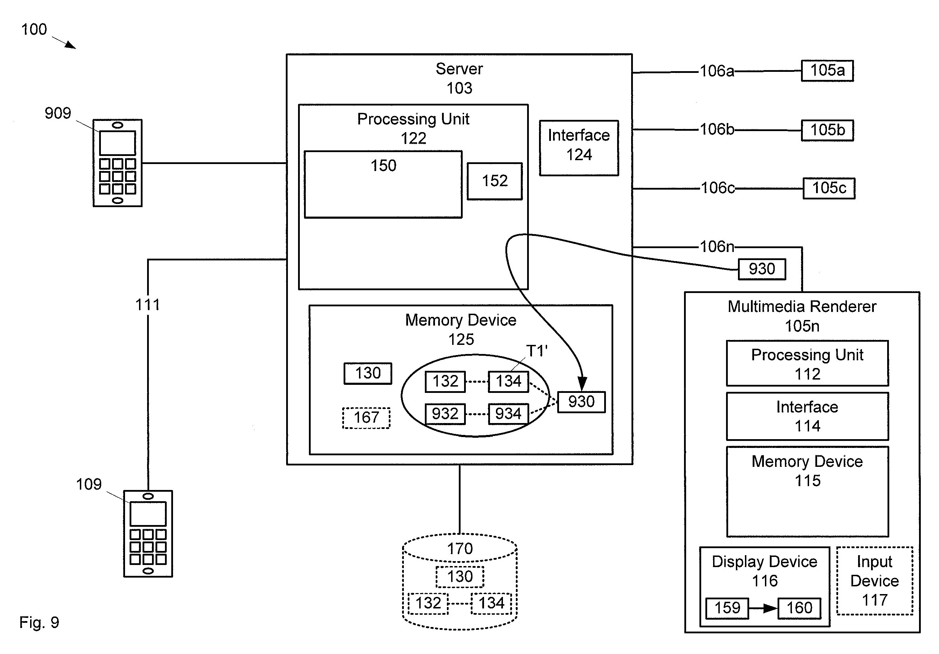

Attention is now directed to Fig. 9, similar to Fig. 1, with like elements having like numbers, however these implementations further comprise a second portable computing device 909 (hereinafter device 909) identified by an identifier 932. Furthermore, server 103 stores identifier 932 in association with identifiers 934 of multimedia renderers 105, as well as identifier 132 in association with identifiers 134 described above, in a Table T1'. In exemplary implementations, it is assumed that identifiers 134 and identifiers 932 each comprise an identifier of multimedia renderer 105n, for example, PIN 6091DBD4 of Table T1 described above. Otherwise identifiers 134 and identifiers 934 can be similar or different (e.g. identifiers 934 can comprise at least a subset of identifiers 134 and/or a set of identifiers of other multimedia renderers different from those of Fig. 9). Furthermore, Table T1' of Fig. 9 is similar to Table T1, however Table T1' comprises both associations between identifier 132 and identifiers 134, and associations between identifier 932 and identifiers 934.

However, in these implementations, privacy filter data 930 is received at server 103 from at least one multimedia renderer 105, in exemplary implementations multimedia renderer 105n. Privacy filter data 930 comprises data for filtering data 101 according to rules generated by multimedia renderer 105n. For example, it can be desired that multimedia renderer 105n not receive data when such data comprises certain tags, but receive data 101 when data 101 comprises other tags: e.g. data is tagged with "Vacation" is not to be received, however data tagged with "Canada" is to be received, but only from device 909. Privacy filter data 930 comprises such privacy rules. Hence, once privacy filter data 930 from multimedia renderer lost and stored at server 103, for example, in association with the identifier 134 of multimedia renderer 105n, then data 101 pushed to multimedia renderer 105n can be further filtered based on privacy filter data 903.

In some implementations, privacy filter data 930 can comprise the contents of Table 4:

**Table 4**

| Privacy Filter Data for PIN 6091DBD4 (multimedia renderer 105n) | | | |
|---|---|---|---|
| Device | PIN | Tag 107 | Filter |
| 109 | 3021ABC1 | Vacation | Do not transmit |
| 909 | 8021DBC1 | Vacation | Do not transmit |
| 909 | 8021DBC1 | Canada | Transmit |

While Table 4 is arranged in rows and columns, it is understood that privacy filter data 930 can be stored in any suitable format. Furthermore, it is understood that the column "Device" is provided for clarity, to identify each device 109, 909 in Fig. with a PIN in column "PIN" (e.g. device 109 is identified by PIN 3021ABC1, and device 909 is identified by PIN 8021DBC1). Column "Device" is hence optional In other implementations, column "Device" can comprise an alias of device 109 and/or device 909 (e.g. "Bob's PDA"). In any event, it is understood from Table 4 that data 101 having at least one tag 107 comprising the text "Vacation" is not to be transmitted to multimedia renderer 105n, even if tag filter data 130 is indicative that data 101 having at least one tag 107 comprising the text "Vacation" is to be transmitted to multimedia renderers 105n. Similarly tagged "Vacation" data is also blocked from device 909 is blocked. However, data tagged with "Canada" is to be received, but only from device 909. In this manner, multimedia renderer 105n can control data being transmitted to multimedia renderer 105n.

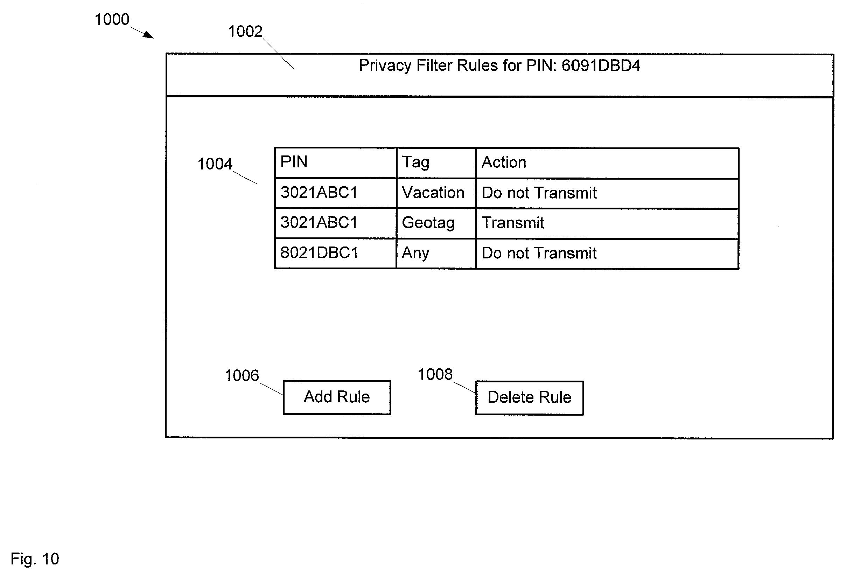

Privacy filter data 903 can be generated via an application at multimedia renderer 105n (or any other suitable multimedia renderer 105) for generating and/or updating privacy filter data 930. For example, as depicted in Fig. 10, the application can comprise a virtual interface 1000 which enables updating the rules contained in the privacy filter data 930. For example, virtual interface 1000 can comprise an identifying header 1002, and a body 1004 in which exiting privacy rules can be viewed and edited, and new rules can be added via a virtual button 1006. It is understood that each line in body 1004 corresponds to a line in Table 4, and that each field of each line in body 1004 can be editable to change a tag value and/or an associated action and/or a device 109, 909 (or group of devices) from which data, such as data 101 (and at least one tag 107), is to be received. It is further understood that each field of body 1004 can be received as alphanumeric text via input device 117 and/or selected via any suitable pull down menu, list, or the like. It is yet further understood that body 1004 can be populated by downloading or synchronising existing privacy filter data 930 from server 103 to multimedia renderer 105n and/or from a copy of privacy filter data 930 stored at multimedia renderer 105n and/or any other suitable method. In some implementations, virtual interface 1000 can be generated at server 103 and viewed at multimedia renderer 105n in a client-server environment. It is yet further understood that actuation of virtual button 1006 can add a line to body 1004, which can then be edited as desired to reflect a new rule in privacy filter data 930. In some implementations, rules in privacy filter data 930 can be deleted via selection of a line in body 1004 and actuation of a virtual button 1008 for deleting rules. In some implementations a virtual button (not depicted) can be use to apply the updates.

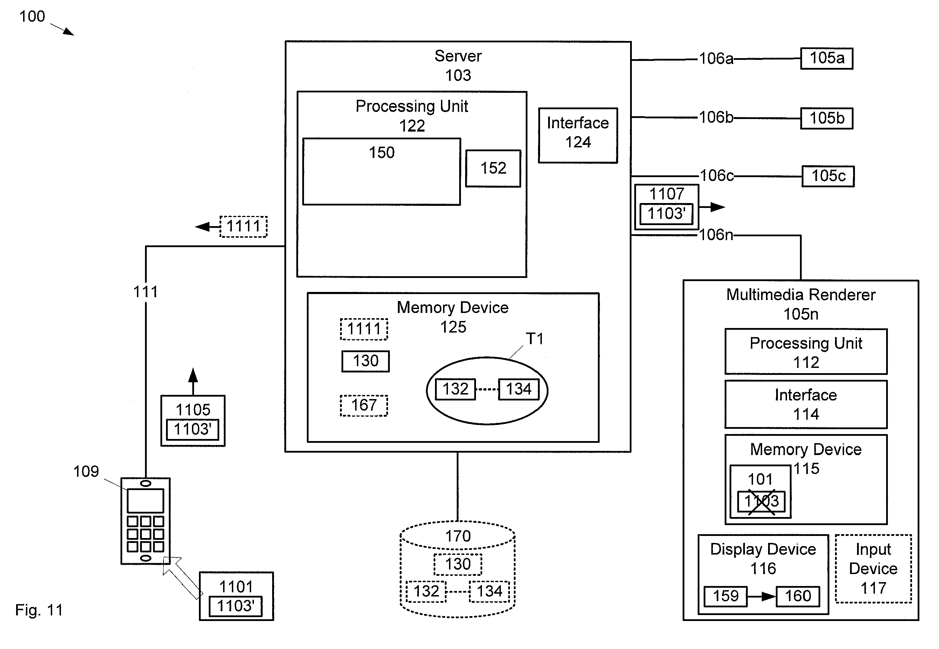

Attention is now directed to Fig. 11, similar to Fig. 1, with like elements having like numbers. However, in these implementations, device 109 is provided with a degree of remote control access over at least one multimedia renderer 105 via server 103: specifically device 109 is enabled to delete data from at least one multimedia renderer 105. For example, in some implementations, device 109 can store a record 1101 of data 101 transmitted to server 103, and hence distributed to at least one multimedia renderer 105; record 1101 can be stored in memory device 215 of Fig. 2, and can comprise identifiers of data 101, for example file names, alphanumeric identifiers or the like. In exemplary implementations, data 101 includes data 1103, previously transmitted to multimedia renderer 105n and stored thereupon. Further, data 1103 is identified by identifier 1103' included in record 1101. Furthermore, in some implementations, identifiers 1103' can take a form similar to that of at least one tag 107.

In these implementations, it is desired that data 1103 be deleted from multimedia renderers 105. For example, in some implementations, data 1103 can be deleted as data 1103 is obsolete and/or to make room for further multimedia data to be transmitted to multimedia renderer 105b.

In any event, in some implementations device 109 transmits a message 1105 comprising identifier 1103' to server 103, server 103 transmitting a delete command 1107 to multimedia renderer 105n, and/or any other multimedia renderer 105 associated with device 109, causing data 1103 to be deleted from to multimedia renderer 105n, and/or any other multimedia renderer 105 associated with device 109. Delete command can comprise identifier 1103'.

In some of these implementations, record 1103 can further include an indication of which multimedia renderers 105 store data 1103 and hence message 1105 can further comprise an indication of which multimedia renderers 105 data 1103 is to be deleted from. In this manner, device 109 can cause data 1103 to be deleted from specific multimedia renderers 105 and not from others. The indication of which multimedia renderers 105 store data 1103 can be received from server 103: for example server 1103 can maintain a list 1111 of identifiers of data transmitted to specific multimedia renderers 105 (e.g. data originally received from device 109, such as data 101) and transmit list 1111 (and/or changes to list 1111) to device 109, such that device 109 has a record of which multimedia renderers 105 store which data. In other implementations, list 1111 can be accessed by device 109 at server 103, or any other suitable device where such a record is stored, though device 109 might not store list 111.

In yet further implementations, data 101 can be tagged with at least one tag 107 including a tag that defines the length of time data 101 is to be stored at a multimedia renderer 105; for example, in a non-limiting implementation, at least one tag 107 can comprise "7 Days", or any other suitable length of time, and one or more multimedia renderers can be enabled to delete the associated data 101 after the time length of time defined in at least one tag 107.

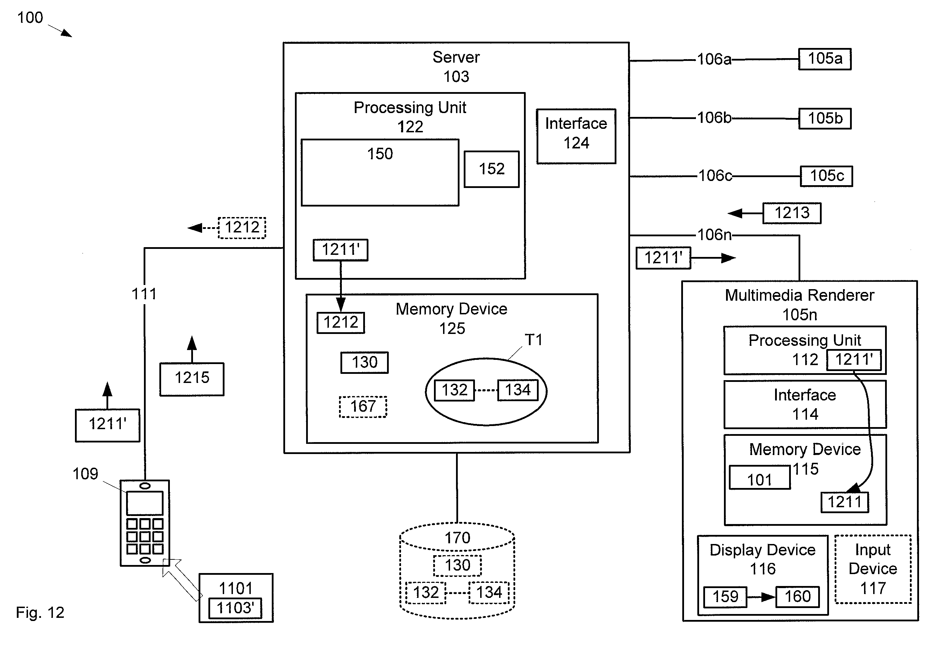

Attention is now directed to Fig. 12, similar to Fig. 1, with like elements having like numbers. However, in these implementations, device 109 is provided with remote control access over at least one multimedia renderer 105 via server 103: specifically, in exemplary implementations, device 109 is enabled to change an order of a playlist 1211. Playlist 1211 is maintained in memory device 115 of multimedia renderer 105n and can be changed via input device 117. In other words, multimedia renderer 105n can store any suitable amount of multimedia data, from any suitable number of sources (e.g. from device 109 and/or other remote devices and/or from removable memory cards or the like), with each multimedia file being played at multimedia renderer 105n in an order defined by playlist 1211. Specifically, playlist 1211 comprises a sequential order in which multimedia data is to be processed at multimedia renderer 105n. In exemplary implementations, a copy 1212 of playlist 1211 can be maintained at server 103 via communication between multimedia renderer 105n and server 103 (e.g. copy 1212 can initially comprise data transmitted to multimedia renderer 105n by server 103, and changes 1213 to playlist 1211 can be transmitted to server 103 by multimedia renderer 105n to update copy 1212).

In these implementations, device 109 can request playlist 1211 and/or copy 1212 server 103 by transmitting a request 1215 for playlist 1211 and/or copy 1212 to server 103. As depicted, server 103 returns copy 1212, but in other implementations, playlist 1211 can then be requested from multimedia renderer 105n, and playlist 1211 transmitted.

In any event, in exemplary implementations copy 1212 is returned to device 109. Once received, copy 1212 can be edited to change the sequential order in which data stored at multimedia renderer 105n is to be processed and/or played. The changed playlist 1211' changes can then be transmitted back to server 103, which then stores the changes in copy 1212, and transmits changed playlist 1211' to multimedia renderer 105n which then either replaced playlist 1211 with changed playlist 1211' or processed changed playlist 1211' to update playlist 1211 (as depicted). Hence, device 109 effectively changes the sequential order in which data is processed at multimedia renderer 105.

In yet further implementations, via exchange of data between server 103 and device 109, as well as exchange of data between server 103 and multimedia renderer 105n, device 109 can be provided with full remote control of multimedia renderer 105n via server 103. For example, a currently playing file can be stopped, fast forwarded, rewound or the like. A currently playing file can be stopped and a next or previous file can be caused to be processed. Hence, for example, if a voice connection is established between a user of device 109 and a viewer of multimedia renderer 105n, device 109 can be used to control multimedia renderer 105n as user narrates the multimedia data being presented at multimedia renderer 105n.

In some of these implementations, there is no need for a copy 1212 and device 109 applies the changes to playlist 1211 that is transmitted back to the multimedia renderer 105. For example, device 109 can request playlist 1211, which is received from multimedia renderer 105 (e.g. via server 103) and there is no need for copy 1212 to be stored at server 103: hence playlist 1211 and/or changes to playlist 1211 and/or changed playlist 1211' can be transmitted between multimedia renderer 105 to device 109, with no further storage of data at server 103. Indeed, no additional actions are needed at server 103, other than for server 103 to act as a conduit for data. However, in yet further implementations, device 109 can be in communication with multimedia renderer 105 without server 103 acting as a conduit, and playlist 1211 and/or changes to playlist 1211 and/or changed playlist 1211' can be transmitted directly between multimedia renderer 105 and device 109.

In some implementations, device 109 creates a playlist that is transmitted to server 103 for distribution to at least one multimedia rendered 105.

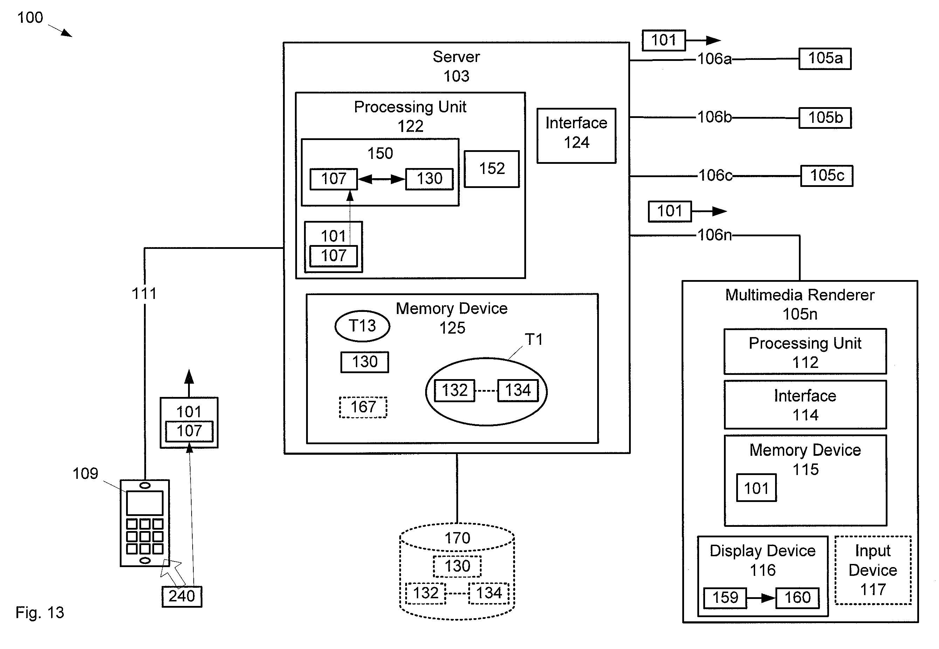

Attention is now directed to Fig. 13 which depicts implementations where at least one tag 107 comprises a geotag, according to non-limiting implementations. Fig. 13 is similar to Fig 1, with like elements having like numbers, however in these implementations, device 109 comprises location unit 240 of Fig. 2 which generates at least one tag 107. Further, server 103 maintains a Table T13 which comprises a list of locations of multimedia renderers 105, for example:

**Table T13**

| Identifiers 134 of Multimedia Renderer 105 (PIN) | IP Address | Location | Multimedia Renderer 105 |
|---|---|---|---|
| 4061BBC1 | 192.999.8.63 | Toronto | 105a |
| 9025AAB2 | 12.999.18.19 | Chicago | 105b |
| 5021HAC3 | 192.999.9.64 | Toronto | 105c |
| 6091DBD4 | 192.999.6.65 | Toronto | 105n |

Table T13 is similar to Table T1 describe above, however excludes the association between identifiers 134 and identifier 132, and includes a location of each multimedia renderer 105. In some implementations, Table T1 can be combined with Table T13. Location can be determined via at least one of the IP address, a location unit in at least one of multimedia renderers 105 or any other suitable method. In any event, when tag filter data 130 includes a rule relating to at least one tag 107 being a geotag, and/or a location based rule, then data 101 can be transmitted based on the location of each multimedia 105 as stored in Table T13.

Attention is now directed to Fig. 14 comprising a system 1400, similar to system 1 of Fig. 1 with like elements having like numbers, however in system 1400 device 109 has been replaced by a computing device 1409 comprising processing unit 1412 interconnected with interface 1414 and memory device 1415, which can be respectively similar to processing unit 122, interface 124 and memory device 125 described above. Furthermore multimedia renderers 105 have been replaced by multimedia renderers 1405a, 1405b, 1405c, 1405n (collectively multimedia renderers 1405 and generically a multimedia renderer 1405), which in these implementations comprise electronic bill boards and/or stores' displays located in locations defined by Table T14, similar to Table T13 described above; indeed, in exemplary implementations multimedia renderers 1405a, 1405c, 1405n can be located in Toronto, Ontario and multimedia renderer 1405b can be located in Chicago, Illinois. Furthermore, computing device 1409 can be an advertising server distributing multimedia data 1401, comprising data to be stored and processed at electronic billboards in specific locations, for example Toronto. Hence, at least one tag 107 can comprise text "Toronto" (and alternatively, any suitable geographic location identifier such as terrestrial coordinates, a geographic area (e.g. "Canada)", etc.), and tag filter data 130 can comprise a rule:

"Transmit to Multimedia Renderers 105 in Toronto when tag 107 comprises "Toronto"".

Hence, data 1401 is transmitted to multimedia renderers 1405a, 1405c, 1405n, and stored thereupon for processing, but not to multimedia renderers 1405b. Hence, in this manner, advertising can be distributed to relevant multimedia renderers 1405, including but not limited to electronic billboards, stores' displays, or the like.

In any event, by transmitting tagged multimedia data to a server which stores pre-configured tag filtering data/rules, multimedia data can then be selectively pushed to multimedia renderers based on the tag filtering data and the tags in the multimedia data. Hence, a computing device that originates the multimedia data need only transmit the multimedia data once to the server, which then distributes the multimedia data according to the rules. The computing device then need only transmit the multimedia once to the server, which then handles the distribution, saving bandwidth at the computing device. The transmission from the computing device to the server may be automated as soon as the data is tagged (which can also be automatically performed) and saved at the computing device, easing the procedure for the user of the computing device. These implementations also enable convenient and remote update of multimedia data stored and processed at multimedia renderers. In instances where the multimedia renderer comprises a digital frame, present implementations conveniently enables the multimedia data stored at the digital frame to be updated dynamically, and with relevance to the geographic area in which the digital frame is located and/or the social relationships between users of the computing device and the frame, and without intervention from a user of the frame. In instances where the multimedia renderer comprises a digital billboard, store displays or the like, present implementations enable multimedia data to be distributed and controlled remotely, such that digital advertising can be distributed based on geographic area or any other suitable criteria.

Those skilled in the art will appreciate that in some implementations, the functionality of device 109, 909, 1409, server 103, multimedia renderers 105, 1405 can be implemented using pre-programmed hardware or firmware elements (e.g., application specific integrated circuits (ASICs), electrically erasable programmable read-only memories (EEPROMs), etc.), or other related components. In other implementations, the functionality of device 109, 909, 1409, server 103, multimedia renderers 105, 1405 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the implementations, and that the above implementations and examples are only illustrations of one or more implementations. The scope, therefore, is only to be limited by the claims appended hereto.

## Claims

1. A method for distributing a multimedia data from a server (103), comprising
storing tag filter data at the server (103);
receiving, at the server (103) from a computing device (109), the multimedia data and at least one tag;
filtering the multimedia data by comparing the at least one tag with the tag filter data; and
transmitting the multimedia data from the server (103) to at least one multimedia renderer (105) associated with at least one of the tag and the computing device (109).

2. The method of claim 1, further comprising using at the server (103) at least one of an identifier of the computing device (109) and an identifier of the at least one multimedia renderer (105) to perform at least one of the filtering and the transmitting.

3. The method of claim 1 or 2 wherein the tag filter data comprises at least one of: tags, the at least one tag, an association between the at least one tag and the at least one multimedia renderer (105), an association between a computing device (109) and a multimedia renderer (105), an association between the at least one tag and the computing device (109), an identifier of the computing device (109) and an identifier of the multimedia renderer (105).

4. The method of any of claims 1 to 3 wherein the tag filter data is exchanged between the server (103) and the computing device (109) by at least one of a provisioning method, a synchronisation method, a remote control method and an update method.

5. The method of any of claims 1 to 4, wherein the filtering comprises comparing the at least one tag with rules and tags from the tag filter data.

6. The method of any of claims 1 to 5, further comprising:
receiving privacy filter data at the server (103) from the at least one multimedia renderer (105);
storing the privacy filter data in association with the at least one identifier of the at least one multimedia renderer (105); and
further filtering the multimedia data to be transmitted to the at least one multimedia renderer (105) based on the privacy filter data.

7. The method of any of claims 1 to 6, wherein the at least one tag comprises a geotag.

8. The method of any of claims 1 to 7, further comprising:
receiving, at the server (103) from the computing device (109), an indication that the multimedia data is to be deleted from the at least one multimedia renderer (105); and, in response,
transmitting a delete command from the server (103) to the at least one multimedia renderer (105) causing the multimedia data to be deleted from the at least one multimedia renderer (105).

9. The method of any of claims 1 to 8, wherein the computing device (109) is provided with remote control access over the at least one multimedia renderer (105) via the server (103).

10. The method of any of claims 1 to 9, further comprising:
receiving from the computing device (109) at the server (103) an indication of a sequential order in which the multimedia data is to be processed at the at least one multimedia renderer (105); and,
transmitting a command from the server (103) to the at least one multimedia renderer (105) causing the multimedia data to be processed in the sequential order.

11. A server (103) for distributing a multimedia data server (103), comprising:
a processing unit (122) interconnected with a memory device (125) and a communication interface (124), the processing unit (124) enabled to implement any of the steps of claims 1 to 10.

12. A method of distributing multimedia data from a computing device (109) to at least one multimedia renderer (105) via a server (103), the method implementable at the computing device (109), the method comprising:
associating at least one tag with the multimedia data; and
transmitting the multimedia data with the at least one tag to the server (103) to trigger the server (103) to transmit the multimedia data to at least one multimedia renderer (105) associated with at least one of the at least one tag and the computing device.

13. A computing device (109) for distributing multimedia data to at least one multimedia renderer (105) via a server (103), computing device (109) comprising:
a processing unit interconnected with a memory device and a communication interface, the processing unit enabled to:
associate at least one tag with the multimedia data; and
transmit the multimedia data with the at least one tag to the server (103), to trigger the server (103) to transmit the multimedia data to at least one multimedia renderer (105) associated with at least one of the at least one tag and the computing device.

14. A computer program product, comprising a computer usable medium having a computer readable program code adapted to be executed to implement a method for distributing a multimedia data via from a server (103), the method comprising:
storing tag filter data at the server (103);
receiving, at the server (103) from a computing device (109), the multimedia data and at least one tag;
filtering the multimedia data by comparing the at least one tag with the tag filter data; and
transmitting the multimedia data from the server (103) to the at least one multimedia renderer (105) associated with at least one of the tag and the computing device (109).

15. A computer program product, comprising a computer usable medium having a computer readable program code adapted to be executed to implement a method of distributing multimedia data from a computing device (109) to at least one multimedia renderer (105) via a server (103), the method implementable at the computing device (109), the method comprising:
associating at least one tag with the multimedia data; and
transmitting the multimedia data with the at least one tag to the server (103), to trigger the server (103) to transmit the multimedia data to at least one multimedia renderer (105) associated with the at least one tag.

## Amended claims

### Amended claims in accordance with Rule 137(2) EPC.

**1.** A method for distributing a multimedia data from a server (103), comprising
storing tag filter data at the server (103), the tag filter data comprising rules for filtering the multimedia data, the tag filter data generated from data received from a computing device (109) enabled to at least one of acquire and store the multimedia data;
receiving, at the server (103) from the computing device (109), the multimedia data and at least one tag;
filtering the multimedia data by comparing the at least one tag with the tag filter data; and, when the tag filter data comprises the at least one tag,
transmitting the multimedia data from the server (103) to at least one multimedia renderer (105) associated with at least one of the tag and the computing device (109).

**2.** The method of claim 1, further comprising using at the server (103) at least one of an identifier of the computing device (109) and an identifier of the at least one multimedia renderer (105) to perform at least one of the filtering and the transmitting.

**3.** The method of claim 1 or 2 wherein the tag filter data comprises at least one of: tags, the at least one tag, an association between the at least one tag and the at least one multimedia renderer (105), an association between a computing device (109) and a multimedia renderer (105), an association between the at least one tag and the computing device (109), an identifier of the computing device (109) and an identifier of the multimedia renderer (105).

**4.** The method of any of claims 1 to 3 wherein the tag filter data is exchanged between the server (103) and the computing device (109) by at least one of a provisioning method, a synchronisation method, a remote control method and an update method.

**5.** The method of any of claims 1 to 4, wherein the filtering comprises comparing the at least one tag with rules and tags from the tag filter data.

**6.** The method of any of claims 1 to 5, further comprising:
receiving privacy filter data at the server (103) from the at least one multimedia renderer (105), the privacy filter data comprising data for filtering the multimedia data according to rules generated by the at least one multimedia renderer (105) such that the at least one multimedia renderer not receive given multimedia data when the given multimedia data comprises certain tags, and such that the at least one multimedia renderer (105) receives other multimedia data when the other multimedia data comprises other tags;
storing the privacy filter data in association with the at least one identifier of the at least one multimedia renderer (105); and
further filtering the multimedia data to be transmitted to the at least one multimedia renderer (105) based on the privacy filter data.

**7.** The method of any of claims 1 to 6, wherein the at least one tag comprises a geotag, the geotag data comprising a location of the computing device (109) when the multimedia data is tagged.

**8.** The method of any of claims 1 to 7, further comprising:
receiving, at the server (103) from the computing device (109), an indication that the multimedia data is to be deleted from the at least one multimedia renderer (105); and, in response,
transmitting a delete command from the server (103) to the at least one multimedia renderer (105) causing the multimedia data to be deleted from the at least one multimedia renderer (105).

**9.** The method of any of claims 1 to 8, wherein the computing device (109) is provided with remote control access over the at least one multimedia renderer (105) via the server (103).

**10.** The method of any of claims 1 to 9, further comprising:
receiving from the computing device (109) at the server (103) an indication of a sequential order in which the multimedia data is to be processed at the at least one multimedia renderer (105); and,
transmitting a command from the server (103) to the at least one multimedia renderer (105) causing the multimedia data to be processed in the sequential order.

**11.** A server (103) for distributing a multimedia data server (103), comprising:
a processing unit (122) interconnected with a memory device (125) and a communication interface (124), the processing unit (124) enabled to implement any of the steps of claims 1 to 10.

**12.** The method of claim 1, further comprising:
associating the at least one tag with the multimedia data at the computing device (109); and
transmitting the multimedia data with the at least one tag from the computing device (109) to the server (103) to trigger the server (103) to perform the transmitting the multimedia data to at least one multimedia renderer (105) associated with at least one of the at least one tag and the computing device(109).

**13.** A computer program product, comprising a computer usable medium having a computer readable program code adapted to be executed to implement the steps of any of the methods of claims 1 to 12.
